# EUROPÄISCHE PATENTANMELDUNG

(11) **EP 1 130 034 A2**
(43) Veröffentlichungstag der Anmeldung: **05.09.2001**
(21) Anmeldenummer: 01103519.3
(22) Anmeldetag: 16.02.2001
(51) Int. Cl.: C08C 19/00, C08L 71/02, C08G 65/32

(54) **Kautschuke mit Polyether-Seitengruppen**

(30) Priorität: 01.03.2000 DE 10009909
(71) Anmelder: BAYER AG, 51368 Leverkusen (DE)
(72) Erfinder: Scholl, Thomas Dr., 51469 Bergisch Gladbach (DE); Trimbach, Jürgen, 50859 Köln (DE)

(57) **Zusammenfassung**

Die vorliegende Erfindung betrifft Kautschuke auf Basis von Diolefinen mit einem bestimmten Gehalt an seitenständigen Polyethergruppen, deren Mischungen mit Füllstoffen sowie die Verwendung dieser Kautschuke bzw. Mischungen zur Herstellung von Kautschukvulkanisaten mit verbesserter Weiterreißfestigkeit sowie günstiger dynamischer Dämpfung. Insbesondere eignen sich die erfindungsgemäßen Kautschuke zur Herstellung von hochverstärkten Kautschuk-Formkörpem, insbesondere für Reifen von Fahrzeugen, die sowohl im Straßenverkehr als auch im Gelände eingesetzt werden.

## Beschreibung

Die vorliegende Erfindung betrifft Kautschuke auf Basis von Diolefinen mit einem bestimmten Gehalt an seitenständigen Polyethergruppen sowie die Verwendung dieser Kautschuke zur Herstellung von Kautschukvulkanisaten mit verbesserter Weiterreißfestigkeit sowie günstiger dynamischer Dämpfung. Insbesondere eignen sich die erfindungsgemäßen Kautschuke zur Herstellung von hochverstärkten Kautschuk-Formkörpern, insbesondere für Reifen von Fahrzeugen, die sowohl im Straßenverkehr als auch im Gelände eingesetzt werden, weil sie neben hoher Nassrutschfestigkeit, geringem Rollwiderstand, hoher Straßenabriebbeständigkeit eine hohe Weiterreißfestigkeit bei höherer Belastbarkeit im Gelände aufweisen.

Doppelbindungshaltige anionisch polymerisierte Lösungskautschuke, wie Lösungs-Polybutadien und Lösungs-Styrol/Butadien-Kautschuke besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glastemperatur und der Molekülverzweigung. Hieraus ergeben sich in der praktischen Anwendung besondere Vorteile in der Relation von Nassrutschfestigkeit und Rollwiderstand des Reifens. So beschreibt US-A 5,227,425 die Herstellung von Reifenlaufflächen aus einem Lösungs-SBR-Kautschuk und Kieselsäure. Nachteilig an diesen Kautschukmischungen ist die begrenzte Weiterreißfestigkeit. Neuartige Kraftfahrzeuge, die sowohl im Straßenverkehr als auch im Gelände eingesetzt werden können ("Multi Utility Vehicles") stellen neben den bekannten Anforderungen an Rollwiderstand, Nassrutschfestigkeit und Abriebverhalten neue Forderungen an eine hohe Weiterreißfestigkeit für den Betrieb des Fahrzeuges im Gelände.

Kautschukmischungen aus Lösungskautschuken auf Basis von Dienen mit seitenständigen funktionellen Gruppen werden auch in der deutschen Patentanmeldung Nr. 198 324 596 beschrieben. Die dort beschriebenen Hydroxylgruppen führen zwar zu Verbesserungen der Straßen-relevanten Eigenschaften, wie Rollwiderstand, Nassbremssicherheit und Abrieb; für den Off-Road-Einsatz sind jedoch weitere Verbesserungen in der Weiterreißfestigkeit wünschenswert, insbesondere in den besonders rollwiderstandsarmen kieselsäuregefüllten Kautschukmischungen.

Kautschukmischungen, die Polyether als Additive enthalten werden auch in EP-A 869 145 beschrieben. Die Polyether werden jedoch dort als Antistatika eingesetzt. Über die Weiterreißfestigkeit wird in EP-A 869 145 keine Angaben gemacht.

Es war daher ein Ziel der vorliegenden Patentanmeldung, Kautschuke aus Diolefinen und gegebenenfalls weiteren Monomeren mit einem höheren Gehalt an wirksamen Polyetherseitengruppen zur Verfügung zu stellen, aus denen sich Reifen mit verbesserten Eigenschaften gleichzeitig für den Straßen- und den Geländeeinsatz herstellen lassen, insbesondere mit geringem Rollwiderstand, höherer Nassrutschfestigkeit, geringem Abrieb und hoher Weiterreißfestigkeit.

Es wurde jetzt überraschenderweise gefunden, dass Lösungskautschuke aus Diolefinen mit einem bestimmten Gehalt an hydroxylgruppenfreien Polyetherseitengruppen besonders günstige Eigenschaften zur Herstellung von Reifen für die beschriebenen "multi utility vehicles" besitzen.

Gegenstand der vorliegenden Erfindung sind daher Kautschuke auf Basis von Diolefinen und gegebenenfalls weiteren einfach ungesättigten Monomeren mit einem Gehalt an 1,2-gebundenen Diolefinen (Vinylgehalt) von 10 bis 80 Gew. %, bevorzugt 20 bis 60 Gew.-%, die dadurch gekennzeichnet sind, dass sie 0,01 bis 20 Gew.-%, bevorzugt 0,1 bis 15 Gew.-%, besonders bevorzugt 0,5 bis 10 Gew.-%, bezogen auf die Gesamtmenge an Kautschuk, an hydroxylgruppenfreie Polyetherseitengruppen enthalten.

Die hydroxylgruppenfreie Polyetherseitengruppen entsprechen den Formeln (I) oder (II) 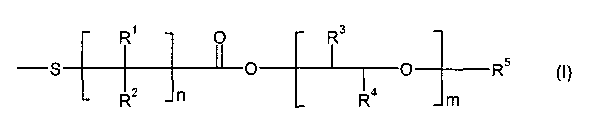 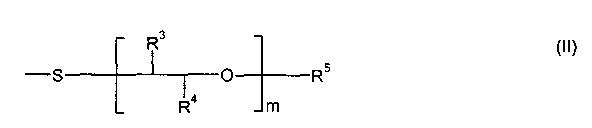 worin
- R¹ und R²: unabhängig voneinander Wasserstoff oder einen C₁- bis C₆-Alkylrest oder einen Rest -COO-(CHR³-CHR⁴ -O-)ₘ -R⁵ bedeuten,
- R³ und R⁴: unabhängig voneinander sowie unabhängig von ihrer Bedeutung in den übrigen Wiederholungseinheiten für Wasserstoff oder eine Methyl- oder Ethylgruppe stehen,
- R⁵: einen linearen, verzweigten oder cyclischen C₁- bis C₂₄-Alkylrest, C₆-bis C₁₈-Aryl- oder C₇- bis C₂₄-Arylalkylrest bedeutet
und
- n: für eine ganze Zahl von 1 bis 6, bevorzugt 1 bis 4, sowie
- m: für eine ganze Zahl von 1 bis 100, bevorzugt 3 bis 30, steht.

Bevorzugt sind Polyetherseitengruppen der folgenden Formeln:

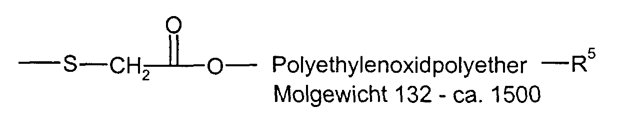

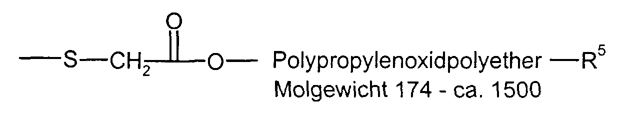

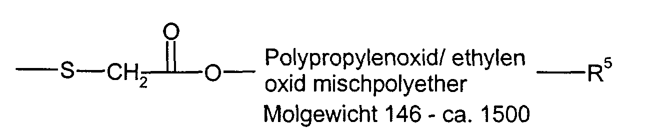

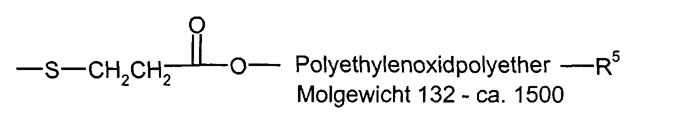

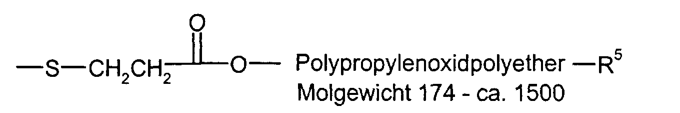

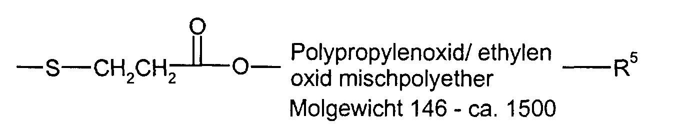

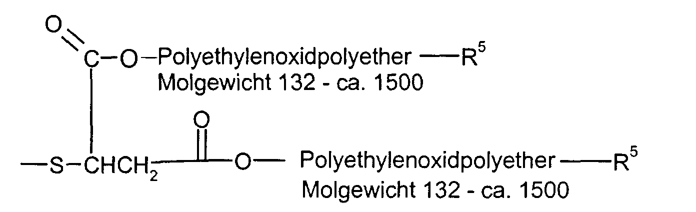

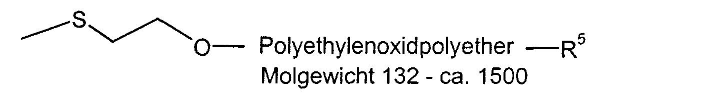

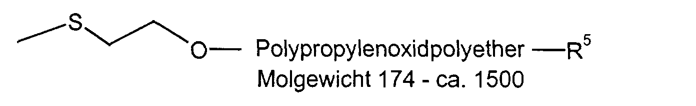

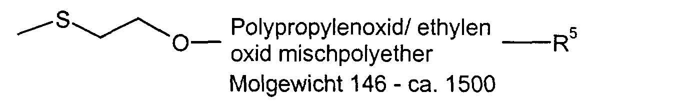

Hierin stehen die Reste R⁵ für C₁- bis C₂₄-Alkylreste, bevorzugt C₁ - bis C₈-Alkylreste, C₆- bis C₁₈-Arylreste, bevorzugt C₆- bis C₁₀-Arylreste, sowie C₇- bis C₂₄-Arylalkylreste, bevorzugt C₇- bis C₁₈-Arylalkylreste. Besonders bevorzugte Reste R⁵ sind Methyl-, Ethyl-, Propyl-, Butyl-, Hexyl-, Octyl-, Dodecyl-, Octadecyl-, Phenyl-, Octylphenyl-, Nonylphenyl- und Dodecylphenyl-Gruppen, ganz besonders bevorzugt sind Methyl-, Ethyl-, Propyl-, Butyl-, Hexyl- und Octyl-Gruppen.

Bevorzugt sind erfindungsgemäß solche Kautschuke, die 0,1 bis 15 Gew.-%, bezogen auf die Gesamtmenge an Kautschuk, an Polyetherseitengruppen der Formel (I) enthalten.

Bevorzugte erfindungsgemäße Kautschuke enthalten neben den Diolefinen als weitere ungesättigte Monomere 0,1 bis 50 Gew. %, bevorzugt 10 bis 40 Gew. %, bezogen auf die Gesamtmenge an Kautschuk, an vinylaromatischen Monomeren in einpolymerisierter Form.

Außerdem können die erfindungsgemäßen Kautschuke noch einen 1,4-trans-Anteil von bis zu 60 Gew.-%, bevorzugt von 10 bis 40 Gew.-%, bezogen auf die Gesamtmenge des einpolymerisierten Diolefins besitzen.

Als Diolefine dienen erfindungsgemäß zum Aufbau der Kautschuke insbesondere 1,3-Butadien, Isopren, 1,3-Pentadien, 2,3-Dimethylbutadien, 1-Vinyl-1,3-butadien und/oder 1,3-Hexadien. Besonders bevorzugt sind 1,3-Butadien und/oder Isopren.

Als vinylaromatische Monomere, die für die Polymerisation eingesetzt werden können, seien beispielsweise genannt: Styrol, o-, m- und p-Methylstyrol, p-tert.-Butylstyrol, α-Methylstyrol, Vinylnaphthalin, Divinylbenzol, Trivinylbenzol und/oder Divinylnaphthalin. Besonders bevorzugt ist Styrol.

Die erfindungsgemäßen Kautschuke besitzen Molgewichte (Zahlenmittel) von etwa 50.000 bis 2.000.000, bevorzugt 100.000 bis 1.000.000, Glastemperaturen von -120°C bis +20°C, bevorzugt -60°C bis 0°C, sowie Mooney-Viskositäten ML 1+4 (100°C) von 10 bis 200, vorzugsweise von 30 bis 150.

Die Herstellung der erfindungsgemäßen Kautschuke erfolgt bevorzugt durch Polymerisation in Lösung in einem dafür geeigneten inerten organischen Lösungsmittel, mittels eines geeigneten Katalysators, bevorzugt eines anionischen Katalysators, beispielsweise auf Alkalimetallbasis, wie n-Butyllithium. Bei dieser Polymerisation können zusätzlich die bekannten Randomizer und Kontrollagentien zur Kontrolle der Mikrostruktur des Kautschukes verwendet werden. Derartige anionische Lösungspolymerisationen sind bekannt und z.B. in I. Franta Elastomers and Rubber Compounding Materials; Elsevier 1989, Seite 73-74, 92-94 und in Houben-Weyl, Methoden der Organischen Chemie, Thieme Verlag, Stuttgart, 1987, Band E 20, Seite 114-134 beschrieben.

Bevorzugt erfolgt die Einführung der Polyetherseitengruppen in den Kautschuk nach erfolgter Polymerisation der eingesetzten Monomere in Lösung durch Umsetzung der erhaltenen Polymerisate, bevorzugt in Gegenwart von bekannten Radikalstartern, mit Polyethermercaptanen der Formeln (III) oder (IV) 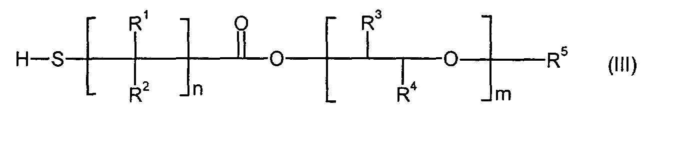 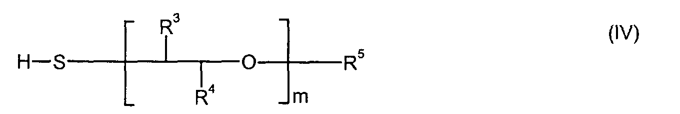 worin
R¹ bis R⁵ und n sowie m die zuvor genannte Bedeutung besitzen.

Bevorzugte Polyethermercaptane der Formel (III) sind Monoester der Thioglykolsäure, 2- und 3-Mercaptopropionsäure, Mercaptobuttersäure und Diester der Mercaptobernsteinsäure mit auf monofunktionellen C₁- bis C₂₄-Alkoholen, bevorzugt C₁- bis C₈-Alkoholen, C₆- bis C₁₈-Arylalkoholen, bevorzugt C₆- und C₁₀-Arylalkoholen, sowie C₇- bis C₂₄-Arylalkylalkoholen, bevorzugt C₇- bis C₁₈-Arylalkylalkoholen gestartete Polyethylenoxidpolyether, Polypropylenoxidpolyether sowie Poly-ethylenoxid/propylenoxidmischpolyether, wobei das Molgewicht des Polyethers bevorzugt im Bereich von 164 (Triethylenglykolmonomethylester) und ca. 1.500, besonders bevorzugt zwischen 300 bis 1000 liegt. Besonders bevorzugte monofunktionelle Starter-Alkohole sind Methyl-, Ethyl-, Propyl-, Butyl-, Hexyl-, Octyl-, Dodecyl-, Octadecylalkohol, Phenol, Octylphenol, Nonylphenol und Dodecylphenol, ganz besonders bevorzugt sind Methyl-, Ethyl-, Propyl-, Butyl-, Hexyl- und Octylalkohol. Die Herstellung dieser Polyether ist bekannter Stand der Technik. Geeignete Polyether sind im Handel erhältlich.

Bevorzugte Polyethermercaptane (IV) sind mercaptoterminierte, auf monofunktionellen C₁- bis C₂₄-Alkoholen, bevorzugt C₁- bis C₈-Alkoholen, C₆- bis C₁₈-Arylalkoholen, bevorzugt C₆- und C₁₀-Arylalkoholen, sowie C₇- bis C₂₄-Arylalkylalkoholen, bevorzugt C₇- bis C₁₈-Arylalkylalkolen gestartete Polyethylenoxidpolyether, Polypropylenoxidpolyether sowie Poly-ethylenoxid/propylenoxidmischpolyether, wobei das Molgewicht des mercaptoterminierten Polyethers bevorzugt zwischen 180 (ω-Mercapto-tetraethylenglykol-monomethylether) und ca. 1.500, besonders bevorzugt zwischen ca. 300 bis ca. 1000 liegt. Derartige Polyethermercaptane (IV) lassen sich in an sich bekannter Weise z.B. aus den entsprechenden hydroxylterminierten Polyethem durch Reaktion mit Schwefelwasserstoff herstellen.

Die Umsetzung der Polyethermercaptane (III) oder (IV) mit den unmodifizierten Kautschuken kann hierbei in Lösungsmittel oder lösungsmittelfrei, z.B. im Kneter oder Extruder, bei Temperaturen von 20 bis 220°C, bevorzugt 70 bis 170°C, durchgeführt werden. Die Reaktionsdauem liegen zwischen wenigen Minuten und mehreren Stunden.

Geignete Lösungsmittel sind beispielsweise Kohlenwasserstoffe, wie Pentan, Hexan, Cyclohexan, Benzol und/oder Toluol.

Bevorzugte Temperaturen für die Umsetzung der Polyethermercaptane (III) oder (IV) mit den unmodifizierten Kautschuken in Lösung sind 60 bis 150°C und für die Umsetzung in Substanz, z.B. im Innenmischer, 100 bis 200°C.

Bevorzugte Radikalstarter, sind z.B. Peroxide, insbesondere Acylperoxiden, wie Dilauroylperoxid und Dibenzoylperoxid, und Ketalperoxide, wie Di-tert.butylperoxitrimethylcyclohexan, ferner Azoinitiatoren, wie Azobisisobutyronitril, sowie Benzpinakolsilylether. Daneben kann in Gegenwart von Photoinitiatoren und sichtbarem oder UV-Licht gearbeitet werden.

Gegenstand der vorliegenden Erfindung sind auch Kautschukmischungen aus den erfindungsgemäßen Kautschuken mit den in der Kautschukindustrie bekannten und verwendeten Füllstoffe; diese umfassen sowohl die aktiven als auch die inaktiven Füllstoffe. Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 - 1000, vorzugsweise 20-400 m²/g (BET-Oberfläche) und mit Primärteilchengrößen von 10 - 400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen;
- synthetische Silikate, wie Aluminiumsilikat, Erdalkalisilikat wie Magnesiumsilikat oder Calciumsilikat, mit BET-Oberflächen von 20 - 400 m²/g und Primärteilchendurchmessern von 10 - 400 nm;

- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;

- Russe. Die hierbei zu verwendenen Russe sind nach dem Flammruss, Furnaceoder Gasrussverfahren hergestellt und besitzen BET-Oberflächen von 20 - 200m²/g, z.B. SAF-, ISAF-, HAF-, FEF- oder GPF-Russe;
- Kautschukgele
- Gummi-Pulver, welches beispielsweise durch Mahlung von Kautschukvulkanisaten erhalten wurde.

Bevorzugt werden als Füllstoffe eingesetzt hochdisperse Kieselsäuren und/oder Russe.

Die Menge an Füllstoffen beträgt üblicherweise 10 bis 300 Gew.-Teile bevorzugt 30 bis 150 Gew.-Teile, bezogen auf 100 Gew.-Teile Kautschuk.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Russen, wobei das gewichtsmäßige Mischungsverhältnis von hellen Füllstoffen zu Russen bei 1 : 0,05 bis 20, bevorzugt 1 : 0,1 bis 10 liegt, wobei die Füllstoffmenge insgesamt 30 bis 150 Gew-Teile, bevorzugt 40 bis 120 Gew.-Teile, bezogen auf 100 Gew.-Teile Kautschuk beträgt.

Selbstverständlich können die erfindungsgemäßen Kautschuke noch mit anderen üblichen Kautschuken abgemischt werden, z.B. mit Naturkautschuk sowie Synthesekautschuken.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials , Elsevier, Amsterdam 1989 beschrieben. Sie umfassen u.a.
- BR -: Polybutadien
- ABR -: Butadien/Acrylsäure-C1-4-alkylester-Copolymere
- CR: Polychloropren
- IR -: Polyisopren
- SBR -: Styrol/Butadien-Copolymerisate mit Styrolgehalten von 1-60, vorzugsweise 20-50 Gew. %
- IIR -: Isobutylen/Isopren-Copolymerisate
- NBR -: Butadien/Acrylnitril-Copolmere mit Acrylnitrilgehalten von 5-60, vorzugsweise 10-40 Gew. %
- HNBR -: teilhydrierter oder volllständig hydrierter NBR-Kautschuk
- EPDM -: Ethylen/Propylen/Dien-Copolymerisate
sowie Mischungen dieser Kautschuke.

Für die Herstellung von Kfz-Reifen sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen nach EP-A 447 066 modifiziert sein können, Polybutadienkautschuk mit hohem 1,4-cis-Gehalt (> 90 %), der mit Katalysatoren auf Basis Ni, Co, Ti oder Nd hergestellt wurde, sowie Polybutadienkautschuk mit einem Vinylgehalt von bis zu 75 % und deren Mischungen von Interesse.

Selbstverständlich können die erfindungsgemäßen Kautschukmischungen noch andere Kautschukhilfsmittel enthalten, die beispielsweise der weiteren Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als zusätzliche Vernetzeragentien werden z.B. Schwefel oder Schwefel-liefernde Verbindungen oder Peroxide eingesetzt. Besonders bevorzugt werden Schwefel oder Schwefel-liefernde Verbindungen in Mengen von ca. 0,01 bis 3 Gew. Teile, bezogen auf Kautschuk, eingesetzt. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Verstärkerharze, z.B. Phenolharze, Stahlcord-Haftmittel, wie z.B. Kieselsäure/Resorcin/Hexamethylentetramin oder Cobalt-Naphtennat, Weichmacher, Tackifier, Treibmittel, Farbstoffe, Pigmente, Wachse, Streckmittel, organische Säuren, Verzögerer, Metalloxide sowie Aktivatoren, enthalten.

Die erfmdungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile Kautschuk.

Wie zuvor erwähnt, können den erfindungsgemäßen Kautschukmischungen noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Für die erfindungsgemäßen Kautschukmischungen, die mit hochaktiven Kieselsäuren gefüllt sind, ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE-A 2 141 159 und DE-A 2 255 577 beschrieben sind. Darüber hinaus kommen in Frage oligomere und/oder polymere schwefelhaltige Silylether entsprechend der Beschreibung in DE-A 4 435 311 und EP-A 670 347. Außerdem sind einzusetzen Mercapatoalkyltrialkoxisilane, insbesondere Mercaptopropyltriethoxisilan und Thiocyanatoalkylsilylether (siehe DE-A 19 544 469), aminogruppenhaltige Silylether, wie 3-Aminopropyltriethoxisilan und N-Oleyl-N-propyltrimethoxisilan, sowie Trimethylolpropan. Die Füllstoffaktivatoren werden in üblichen Mengen eingesetzt, d.h. in Mengen von 0,1 bis 15 Gew.-Teile, bezogen auf 100 Gew.-Teile Kautschuk.

Die erfindungsgemäßen Kautschukmischungen können z.B. hergestellt werden durch Abmischung der erfindungsgemäßen Kautschuke mit den entsprechenden Füllstoffen und den Kautschukhilfsmitteln in geeigneten Mischapparaturen, wie Knetern, Walzen oder Extrudern, oder auch durch Vermischen der Lösungen des Kautschuks mit den Füllstoffen und anschließender Entfernung des Lösungsmittels z.B. mittels Wasserdampfdestillation.

Ein weiterer Gegenstand der vorliegenden Erfindung ist die Verwendung der erfindungsgemäßen Kautschukmischungen zur Herstellung von Vulkanisaten, die wiederum für die Herstellung von bevorzugt hochverstärkten Kautschuk-Formkörpern, insbesondere für die Herstellung von Reifen sowie Reifenteilen, dienen.

### Beispiele

### Beispiel 1 Herstellung eines Polyethermercaptans

275 g Polyethylenglykolmonomethylether mit dem Molekulargewicht 550 werden mit 53 g 3-Mercaptopropionsäure, 0,2 g p-Toluolsulfonsäure sowie 0,5 g Vulkanox BKF (phenolisches Antioxidant der Bayer AG) in 360 ml Toluol 17 Stunden am Wasserabscheider erhitzt. Nach dem Abdestillieren des Lösungsmittels im Vakuum (0,1 mm) bei 120°C erhielt man 323 g eines farblosen Öls.

### Beispiel 2 Lösungs-SBR-Kautschuk mit Polyetherseitengruppen

Eine Lösung von 500 g Lösungs-SBR-Kautschuk, Buna VSL 5025-0 (Bayer AG, Gehalt an gebundenem Styrol 25 Gew. %, Gehalt an 1.2-gebundenem Butadien 50 Gew. %. 20 % des Butadiens sind in 1,4-trans-Form einpolymerisiert) in 4 1 Cyclohexan wurde bei 80°C mit 6,25 g des Polyethermercaptans aus Beispiel 1 und 0,5 g Dilauroylperoxid versetzt. Anschließend rührte man 5 Stunden bei 80°C nach. Dann setzte man 2,5 g Stabilisator Vulkanox® 4020 (Bayer AG) hinzu und destillierte das Lösungsmittel mit Wasserdampf ab. Nach dem Trocknen bei 70°C im Vakuum erhielt man 508,5 g eines farblosen Kautschuks mit der Mooneyviskosität ML 1+4 (100°C) 80. Gehalt an gebundenen Polyetherseitengruppen 1,24 Gew. % (bezogen auf Gesamtkautschuk). Gehalt an 1.2-gebundenem Butadien (Vinylgehalt) 50 Gew. %, Glastemperatur: -17°C,

### Beispiel 3 - 4:

Es wurde wie in Beispiel 2 verfahren, wobei die dort verwendeten Mengen an Polyethermercaptan aus Beispiel 1 und Dilauroylperoxid durch die in folgender Tabelle genannten Mengen ersetzt wurden:

| ***Beispiel- Nr.*** | ***Polyether- mercaptan Bsp.1*** | ***Dilauroyl- peroxid*** | ***Viskosität ML 1+4*** | ***Glas- temperatur*** |
|---|---|---|---|---|
| **3** | 12,5 g | 1 g | 100 | -19° C |
| **4** | 25 g | 1 g | 88 | -19° C |

### Beispiel 5: Kautschukmischungen und Vulkanisate

In einem 1,5 1 Kneter wurden folgende Kautschukmischungen hergestellt. (Mischdauer: 5 Minuten, Drehzahl 60 UpM). Schwefel und Beschleuniger wurden zum Schluss bei 50°C auf einer Walze zugemischt:

| | **Vergleich** | **Beispiel** | **Beispiel** |
|---|---|---|---|
| | **5.1** | **5.A** | **5.B** |
| **im Kneter gemischt:** | | | |
| L-SBR Buna VSL 5025-0 (Bayer AG) | 70 | 0 | 0 |
| Polyether L-SBR Bsp. 3 | 0 | 70 | 0 |
| Polyether L-SBR Bsp. 4 | 0 | 0 | 70 |
| Polybutadien Buna CB 25 (Bayer AG) | 30 | 30 | 30 |
| Kieselsäure Vulkasil S (Bayer AG) | 70 | 70 | 70 |
| Russ N 121 (DegussaHüls) aromat. Mineralöl | 10 | 10 | 10 |
| Enerthene 1849-1 (BP) | 37,5 | 37,5 | 37,5 |
| Zinkoxid | 3 | 3 | 3 |
| Stearinsäure | 1 | 1 | 1 |
| Antioxidans Vulkanox HS (Bayer AG) | 1 | 1 | 1 |
| Antioxidans Vulkanox 4020 (Bayer AG) | 1 | 1 | 1 |
| Silan Si 69 (DegussaHüls) | 5,6 | 5,6 | 5,6 |

| **auf der Walze zugemischt:** | | | |
|---|---|---|---|
| Schwefel | 1,5 | 1,5 | 1,5 |
| Beschleuniger Vulkacit CZ (Bayer AG) | 1,8 | 1,8 | 1,8 |
| Beschleuniger Vulkacit D (Bayer AG) | 2 | 2 | 2 |

Anschließend wurden die Mischungen 20 Minuten bei 170°C vulkanisiert. Es wurden folgende Vulkansiateigenschaften gefunden:

| | | | |
|---|---|---|---|
| Spannungswert 100 % Dehnung (MPa) | 3,2 | 3,2 | 3,3 |
| Spannungswert 300 % Dehnung (MPa) | 10,9 | 12,6 | 13,4 |
| Bruchdehnung (%) | 400 . | 340 | 320 |
| Rückprallelastizität bei 23°C (%) | 30 | 29 | 28 |
| Rückprallelastizität bei 70°C (%) | 51 | 55 | 57 |
| Härte Shore A (23°C) | 70 | 65 | 64 |
| Abrieb DIN 53.516 (mm³) | 84 | 75 | 78 |
| Weiterreißwiderstand DIN 53.515 (N/mm) | 28,7 | 40 | 40 |

Die Prüfergebnisse belegen, dass die Lösungskautschuke mit dem erfindungsgemäßen Gehalt an Polyetherseitengruppen Vulkanisate mit verbesserten dynamischen Dämpfungseigenschaften (niedrige Rückprallelastizität bei 23°C korreliert mit höherer Nassrutschfestigkeit bei Reifen, höhere Rückprallelastizität bei 70°C korreliert mit geringerem Rollwiderstand bei Reifen) sowie niedrigerem Abrieb bei einem deutlich verbesserten Weiterreißwiderstands-Niveau liefern.

## Patentansprüche

1. Kautschuke auf Basis von Diolefinen und gegebenenfalls weiteren einfach ungesättigten Monomeren mit einem Gehalt an 1,2-gebundenen Diolefinen (Vinylgehalt) von 10 bis 80 Gew. %, **dadurch gekennzeichnet**, dass sie 0,01 bis 20 Gew. %, bezogen auf die Gesamtmenge an Kautschuk, an hydroxylgruppenfreien Polyetherseitengruppen enthalten.

2. Kautschuke gemäß Anspruch 1, **dadurch gekennzeichnet**, dass sie als hydroxylgruppenfreie Polyetherseitengruppe solche der Formeln (I) oder (II): 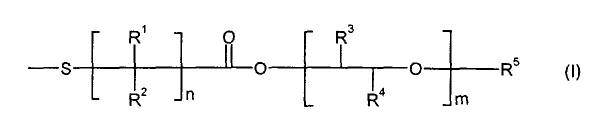 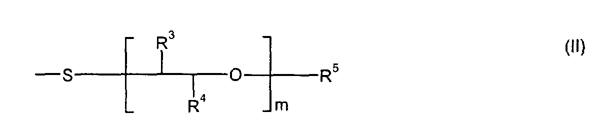 worin
R¹ und R² unabhängig voneinander Wasserstoff oder einen C₁- bis C₆-Alkylrest oder einen Rest -COO-(CHR³-CHR⁴ -O-)ₘ -R⁵ bedeuten,
R3 und R4 unabhängig voneinander sowie unabhängig von ihrer Bedeutung in den übrigen Wiederholungseinheiten für Wasserstoff oder eine Methyl- oder Ethylgruppe stehen,
R⁵ einen linearen, verzweigten oder cyclischen C₁- bis C₂₄-Alkylrest, C₆- bis C₁₈-Aryl- oder C₇- bis C₂₄-Arylalkylrest bedeutet
und
n für eine ganze Zahl von 1 bis 6 sowie
m für eine ganze Zahl von 1 bis 100 steht,
enthalten.

3. Kautschuke gemäß Anspruch 1, **dadurch gekennzeichnet**, dass die Kautschuke 0,1 bis 50 Gew.-%, bezogen auf die Gesamtmenge an Kautschuk, an einpolymerisierten vinylaromatischen Monomeren enthalten.

4. Kautschukmischungen basierend auf Kautschuken gemäß Anspruch 1, **dadurch gekennzeichnet**, dass sie 10 bis 300 Gew.-Teile an Füllstoffen, bezogen auf 100 Gew.-Teile an Kautschuk, sowie gegebenenfalls Naturkautschuk und andere Synthesekautschuke, Kautschukhilfsmittel sowie Vernetzer enthalten.

5. Verwendung der Kautschuke nach Anspruch 1 zur Herstellung von Kautschukvulkanisaten und Kautschuk-Formkörpern, insbesondere zur Herstellung von Reifen und Reifenteilen.
